# EUROPÄISCHE PATENTSCHRIFT

(11) **EP 0 720 994 B1**
(45) Veröffentlichungstag und Bekanntmachung des Hinweises auf die Patenterteilung: **28.03.2001**
(21) Anmeldenummer: 95120534.3
(22) Anmeldetag: 27.12.1995
(51) Int. Cl.: C08G 18/79, C08G 18/32

(54) **Dimerdiol-modifizierte Uretdion-Pulverlackvernetzer**
Dimerdiol-modified crosslinking agents for powder points containing urethdiane groups
Agents de réticulation pour revêtements en poudre contenant des groupes d'uréthdione modifiés par des diméres avec fonction diol

(30) Priorität: 09.01.1995 DE 19500403
(43) Veröffentlichungstag der Anmeldung: 10.07.1996
(73) Patentinhaber: BAYER AG, 51368 Leverkusen (DE)
(72) Erfinder: Laas, Hans-Josef, Dr., D-50733 Köln (DE); Halpaap, Reinhard, Dr., D-51519 Odenthal (DE); Meier-Westhues, Hans-Ulrich, Dr., D-51379 Leverkusen (DE); Schultz, Wolfgang, D-47829 Krefeld (DE)

(56) Entgegenhaltungen:
- EP-A- 0 045 996
- DE-A- 2 312 391
- FR-A- 2 268 840

## Beschreibung

Die Erfindung betrifft neue, Uretdiongruppen aufweisende Polyadditionsverbindungen, ein Verfahren zu ihrer Herstellung und ihre Verwendung als Ausgangskomponente bei der Herstellung von Polyurethankunststoffen, insbesondere als Vernetzer für Hitze-vernetzbare Pulverlacke.

Bei Raumtemperatur feste Kombinationen aus organischen Polyhydroxylverbindungen und blockierten Polyisocyanaten stellen wertvolle Bindemittel für Hitze-vernetzbare Pulverlacke dar (vgl. z. B. DE-OS 21 05 777, DE-OS 25 42 191, DE-OS 31 43 060, DE-OS 27 35 497, DE-OS 28 42 641, EP-A 286 799, EP-A 218 040, EP-A 460 963, DE-OS 28 01 126, EP-A 403 779, WO 91/15532, US-PS 3 857 818, US-PS 4 375 539, EP-A 409 745, DE-OS 28 12 252, DE-OS 29 46 085 oder DE-OS 34 34 881).

Den Systemen dieser Vorveröffentlichungen gemeinsam ist der Nachteil, daß bei der thermischen Vernetzung die als Blockierungsmittel eingesetzten Verbindungen abgespalten werden und in die Umwelt entweichen. Bei ihrer Verarbeitung müssen daher aus Gründen der Ökologie und Arbeitshygiene besondere Vorkehrungen zur Reinigung der Abluft und/oder Wiedergewinnung des Blockierungsmittels getroffen werden.

Ein Versuch, diesen prinzipiellen Nachteil zu beseitigen, ist in der Verwendung von blockierungsmittelfreien, Uretdiongruppen-haltigen PUR-Pulverlackhärtern zu sehen, bei denen die Vernetzung unter thermischer Rückspaltung der Uretdiongruppen erfolgt.

Die Herstellung solcher Pulverlackvernetzer ist prinzipiell bekannt. So beschreibt die DE-OS 24 20 475 Umsetzungsprodukte Uretdiongruppen-haltiger Polyisocyanate bzw. Polyisocyanatgemische mit difunktionellen und gegebenenfalls monofunktionellen, gegenüber Isocyanaten reaktive Gruppen tragenden aliphatischen oder cycloaliphatischen Verbindungen als blockierungsmittelfreie Vernetzer für PUR-Einbrennsysteme. Insbesondere bei der Umsetzung Uretdiongruppen-haltiger Polyisocyanate auf Basis aromatischer Diisocyanate, wie Toluylendiisocyanat (TDI), mit einfachen, gegebenenfalls Ethersauerstoff aufweisenden Diolen entstehen feste, als Pulverlackhärter geeignete Produkte, die Schmelzpunkte im Bereich von 140 bis 260 °C aufweisen.

Da die Rückspaltung des Uretdionringes in Gegenwart von hydroxyfunktionellen Reaktionspartnern schon ab Temperaturen von etwa 110 °C einsetzt, lassen sich die beschriebenen, als Pulverlackvernetzer geeigneten Polyadditionsprodukte nicht in Schmelze, sondern nur in gegenüber Isocyanaten inerten Lösemitteln gelöst herstellen, was anschließend einen zusätzlichen Verfahrensschritt zur Abtrennung des Hilfslösemittels erforderlich macht.

Uretdiongruppen-haltige Pulverlackvernetzer, aufgebaut aus linearem, difunktionellem IPDI-Uretdion, einfachen, gegebenenfalls Ethersauerstoff aufweisenden Diolen und gegebenenfalls endständig Monoaminen oder Monoalkoholen, sind Gegenstand der EP-A 00 45 994, EP-A 00 45 996 und EP-A 00 45 998. Auch bei der Herstellung dieser Polyadditionsprodukte darf eine Reaktionstemperatur von 110°C nicht überschritten werden, da sonst Rückspaltung der Uretdiongruppen eintritt. Insbesondere bei einem hohen Verlängerungsgrad, wie er für eine hohe Uretdionfunktionalität des Vernetzers und somit eine hohe Vernetzungsdichte erforderlich ist, d.h. wenn mindestens 70 % der NCO-Gruppen der difunktionellen IPDI-Uretdione unter Kettenverlängerung mit Diolen umgesetzt werden, entstehen jedoch Produkte, die Schmelzpunkte im Bereich dieser Rückspalttemperatur oder sogar darüber aufweisen. Solche Polyadditionsverbindungen lassen sich daher ebenfalls nur in Lösung mit einem nachfolgenden Ausdampfschritt sicher und reproduzierbar herstellen.

Jedoch auch die in den genannten Vorveröffentlichungen beschriebenen IPDI-Uretdionpulverlackhärter mit deutlich unterhalb der Rückspalttemperatur liegenden Schmelzpunkten im Bereich von etwa 80 °C besitzen bei der maximal erlaubten Reaktionstemperatur von 110 °C noch so hohe Schmelzviskositäten, daß auch ihre Produzierbarkeit in der Schmelze aufgrund der ungenügenden Rührbarkeit im technischen Maßstab an Grenzen stößt.

Pulverlacke, die unter Verwendung der bekannten Uretdiongruppen-haltigen Pulverlackhärter des Standes der Technik hergestellt wurden, zeigen im übrigen wegen der hohen Schmelzviskosität solcher Verbindungen zumeist nur mäßige optische Eigenschaften, insbesondere einen ungenügenden Verlauf.

Es war daher die der vorliegenden Erfindung zugrundeliegende Aufgabe, Uretdiongruppen-haltige PUR-Pulverlackvernetzer zur Verfügung zu stellen, die nicht mit den geschilderten Nachteilen der Polyadditionsprodukte des Standes der Technik behaftet sind.

Diese Aufgabe konnte mit der Bereitstellung der nachfolgend näher beschriebenen erfindungsgemäßen Polyadditionsverbindungen bzw. des Verfahrens zu ihrer Herstellung gelöst werden. Die nachfolgend näher beschriebenen erfindungsgemäßen Polyadditionsverbindungen basieren auf der überraschenden Beobachtung, daß Uretdiongruppen aufweisende Polyadditionsverbindungen, bei deren Herstellung Dimeralkohole als Diolkomponenten mitverwendet wurden, bereits bei Temperaturen nur wenig oberhalb ihres Schmelzpunktes so niedrige Schmelzviskositäten aufweisen, daß ihre problemlose Herstellung in der Schmelze ermöglicht wird und sich mit ihrer Hilfe Pulverbeschichtungen erhalten lassen, die sich durch hervorragenden Verlauf und sehr hohen Glanz auszeichnen. Besonders überraschend ist dabei die Tatsache, daß die nachstehend näher beschriebenen, erfindungsgemäßen Uretdiongruppen aufweisenden Polyadditionsverbindungen, bei deren Herstellung Dimeralkohole als Diolkomponenten mitverwendet wurden, bei ihrer Verwendung als Härterkomponente in PUR-Pulverlacken bereits bei deutlich niedrigeren Einbrenntemperaturen zu vollvernetzten Lackfilmen aushärten, als die entsprechenden Polyadditionsverbindungen des Standes der Technik, bei deren Herstellung keine Dimeralkohole mitverwendet wurden.

Gegenstand der vorliegenden Erfindung sind Polyadditionsverbindungen, die unterhalb von 40 °C in fester und oberhalb von 125 °C in flüssiger Form vorliegen und
a) einen Gehalt an freien Isocyanatgruppen (berechnet als NCO; Molekulargewicht = 42) von 0 bis 2 Gew.-%,
b) einen Gehalt an Uretdiongruppen (berechnet als C₂N₂O₂; Molekulargewicht = 84) von 3 bis 16 Gew.-% und
c) einen Gehalt an Urethangruppen (berechnet als -NH-CO-O; Molekulargewicht = 59) von 10 bis 22 Gew.-% aufweisen,
dadurch gekennzeichnet, daß
d) der Gehalt an Urethangruppen, die durch Reaktion von Dimerdiolen mit Isocyanatgruppen erhalten wurden, mindestens 1 Gew.-% beträgt.

Gegenstand der Erfindung ist auch ein Verfahren zur Herstellung dieser Polyadditionsverbindungen, das dadurch gekennzeichnet ist, daß man
A) Uretdiongruppen aufweisende Polyisocyanate einer mittleren Isocyanatfunktionalität von mindestens 2,0, gegebenenfalls unter Mitverwendung von
B) weiteren Diisocyanaten in einer Menge von bis zu 70 Gew.-%, bezogen auf das Gesamtgewicht der Komponenten A) und B), mit
C) Dimerdiolen, gegebenenfalls unter gleichzeitiger Mitverwendung von
D) weiteren Diolen eines Molekulargewichtes von 62 - 300 in einer Menge von bis zu 70 Gew.-%, bezogen auf das Gesamtgewicht der Komponenten C) und D), und/oder gegebenenfalls
E) weiteren gegenüber Isocyanatgruppen reaktiven, monofunktionellen Verbindungen in einer Menge von bis zu 40 Gew.-%, bezogen auf das Gesamtgewicht der Komponenten C), D) und E),
unter Einhaltung eines Äquivalentverhältnisses von Isocyanatgruppen zu gegenüber Isocyanaten reaktiven Gruppen von 1,2:1 bis 0,6:1 miteinander umsetzt, wobei im übrigen Art und Mengenverhältnisse der genannten Ausgangsstoffe so gewählt werden, daß die resultierenden Verfahrensprodukte den oben unter a) bis d) genannten Bedingungen entsprechen.

Gegenstand der Erfindung ist auch die Verwendung dieser Polyadditionsverbindungen als Ausgangskomponente bei der Herstellung von Polyurethankunststoffen, insbesondere als Vernetzerkomponente in Hitze-vernetzbaren Zweikomponenten-Polyurethan-Pulverlacken bei der Beschichtung beliebiger hitzeresistenter Substrate nach den Methoden der Pulverlacktechnologie.

Ausgangsverbindungen A) für das erfindungsgemäße Verfahren sind beliebige Uretdiongruppen aufweisende Polyisocyanate einer mittleren Isocyanatfunktionalität von mindestens 2,0, vorzugsweise von 2,0 bis 2,5 mit einem NCO-Gehalt von 10 bis 30 Gew.-%, wie sie sich in an sich bekannter Weise durch katalytische Dimerisierung eines Teils der Isocyanatgruppen einfacher Diisocyanate und vorzugsweise sich anschließende Abtrennung des nicht umgesetzten Diisocyanatüberschusses, beispielsweise durch Dünnschichtdestillation bis auf einen Restgehalt von max. 0,5 Gew.-%, erhalten lassen. Zur Herstellung der Ausgangsverbindungen A) sind beliebige Diisocyanate mit aliphatisch, cycloaliphatisch, araliphatisch und/oder aromatisch gebundenen Isocyanatgruppen, beispielsweise solche des Molekulargewichtsbereiches 140 bis 400, geeignet, wie z. B. 1,4-Diisocyanatobutan, 1,6-Diisocyanatohexan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3-Diisocyanato-2(4)-methylcyclohexan, 1-Isocyanato-3,3,5-trimethyl-5-isocyanatomethyl-cyclohexan (Isophorondiisocyanat), 1-Isocyanato-1-methyl-4(3)-isocyanatomethylcyclohexan, 4,4' -Diisocyanatodicyclohexylmethan, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat und Naphthylen-1,5-diisocyanat sowie beliebige Gemische solcher Diisocyanate.

Als Katalysatoren zur Herstellung der Ausgangsverbindungen A) aus den genannten Diisocyanaten sind grundsätzlich alle bekannten, die Dimerisierung von Isocyanatgruppen katalysierenden Verbindungen geeignet, wie z. B. tertiäre organische Phosphine der in der US-PS 4 614 785, Kolonne 4, Zeilen 11 bis 47, oder den DE-OS'en 1 934 763 und 3 900 053 genannten Art, Tris-(dialkylamino)phosphine der in den DE-OS'en 3 030 513, 3 227 779 und 3 437 635 genannten Art, substituierte Pyridine der in den DE-OS'en 1 081 895 und 3 739 549 genannten Art oder substituierte Imidazole oder Benzimidazole der in der EP 417 603 genannten Art.

Bevorzugte Ausgangsverbindungen A) für das erfindungsgemäße Verfahren sind Uretdiongruppen aufweisende Polyisocyanate auf Basis von Diisocyanaten mit aliphatisch und/oder cycloaliphatisch gebundenen Isocyanatgruppen der oben beispielhaft genannten Art oder Gemische solcher Polyisocyanate.

Besonders bevorzugt ist die Verwendung von Uretdiongruppen aufweisenden Polyisocyanaten auf Basis von 1,6-Diisocyanatohexan (HDI) mit einem NCO-Gehalt von 19,5 bis 25,0 Gew.-% und einem Gehalt an Uretdiongruppen (C₂N₂O₂) von 15,0 bis 25,0 Gew.-% oder auf Basis von l-Isocyanato-3,3,5-trimethyl-5-isocyanatomethylcyclohexan (IPDI) mit einem NCO-Gehalt von 15,0 bis 18,9 Gew.-% und einem Gehalt an Uretdiongruppen von 12,0 bis 18,9 Gew.-%. Ebenfalls bevorzugt sind beliebige Gemische von Uretdiongruppen aufweisenden Polyisocyanaten der genannten Art, ebenso wie Mischdimere, d.h. Uretdiongruppen aufweisende Polyisocyanate mit einem NCO-Gehalt von 16,0 bis 24,0 Gew.-% und einem Gehalt an Uretdiongruppen von 13,0 bis 24,0 Gew.-%, wie sie unter Verwendung von Gemischen aus HDI und IPDI bei der Dimerisierungsreaktion erhalten werden können.

Bei der an sich bekannten Herstellung der Uretdiongruppen aufweisenden Polyisocyanate durch katalytische Dimerisierung der beispielhaft genannten Diisocyanate erfolgte oftmals in untergeordnetem Umfang gleichzeitig mit der Dimerisierungsreaktion eine Trimerisierungsreaktion unter Bildung von höher als difunktionellen, Isocyanuratgruppen aufweisenden Polyisocyanaten, was zur Folge hat, daß die mittlere NCO-Funktionalität der Komponente A), bezogen auf die freien NCO-Gruppen, vorzugsweise bei 2,0 bis 2,5 liegt.

Gegebenenfalls können beim erfindungsgemäßen Verfahren weitere Diisocyanate B) mitverwendet werden. Hierbei handelt es sich beispielsweise um die oben beschriebenen, zur Herstellung der Ausgangsverbindungen A) geeigneten Diisocyanate mit aliphatisch, cycloaliphatisch, araliphatisch und/oder aromatisch gebundenen Isocyanatgruppen. Diese Diisocyanate B) werden, falls überhaupt, in Mengen von bis zu 70 Gew.-%, vorzugsweise bis zu 50 Gew.-%, bezogen auf das Gesamtgewicht der Komponenten A) und B) mitverwendet. Für das erfindungsgemäße Verfahren geeignete Gemische an Ausgangskomponenten A) und B) stellen auch Lösungen von Uretdiongruppen aufweisenden Polyisocyanaten in monomeren Diisocyanaten dar, wie man sie bei der oben beschriebenen Herstellung der Ausgangsverbindungen A) erhält, wenn man nach anteiliger katalytischer Dimerisierung auf die Abtrennung der überschüssigen, nicht umgesetzten Diisocyanate verzichtet. In diesem Fall kann der Anteil der Diisocyanate B) an der Gesamtmenge der Ausgangskomponenten A) und B) auch bis zu 70 Gew.-% betragen. Bevorzugte Diisocyanate B), wie sie gegebenenfalls beim erfindungsgemäßen Verfahren mitverwendet werden können, stellen Diisocyanate mit cycloaliphatisch gebundenen Isocyanatgruppen dar. Besonders bevorzugt ist die Verwendung von 1-Isocyanato-3,3,5-trimethyl-5-isocyanatomethyl-cyclohexan und/oder 4,4'-Diisocyanatodicyclohexylmethan.

Ausgangsverbindungen C) für das erfindungsgemäße Verfahren sind Dimerdiole, wie sie in an sich bekannter Weise beispielsweise durch Hydrierung von dimeren Fettsäuren und/oder deren Estern gemäß der DE-AS 1 768 313 hergestellt werden können. Geeignete Edukte hierfür sind Dimerisationsprodukte von Ölsäure, Linolsäure, Linolensäure, Palmitoleinsäure, Elaidinsäure und/oder Erucasäure und/oder deren Estern. Besonders bevorzugt werden als Edukte Dimerisierungsprodukte von ein- oder mehrfach ungesättigten Fettsäuremischungen, wie sie bei der Spaltung von natürlichen Fetten und/oder Ölen, beispielsweise von Olivenöl, Sonnenblumenöl, Sojaöl, Baumwollsaatöl und/oder Tallöl anfallen. In Abhängigkeit von den gewählten Reaktionsbedingungen der an sich bekannten Dimerisierungen können neben Dimerfettsäuren auch wechselnde Mengen an oligomeren Fettsäuren und/oder Restmengen an monomeren Fettsäuren bzw. deren Estern vorliegen. Enthalten die dimerisierten Fettsäuren bzw. Fettsäureester größere Mengen monomerer Fettsäuren bzw. Fettsäureester, so kann es zweckmäßig sein, diese nach oder vor der Hydrierung zu den Dimerdiolen destillativ abzutrennen, vorzugsweise als Fettsäureester von niederen Alkoholen mit 1 bis 4 C-Atomen.

Die Hydrierungen der dimerisierten Fettsäuren bzw. deren Ester können gemäß der DE-AS 17 68 313 in Gegenwart von kupfer- und/oder zinkhaltigen Katalysatoren in üblichen kontinuierlich arbeitenden Druckhydrierapparaturen mit Gaskreislauf durchgeführt werden. Unter diesen Umständen werden nicht nur die Carboxylgruppen der Fettsäuren zu Hydroxylgruppen hydriert, sondern auch gegebenenfalls noch in den dimerisierten Fettsäuren bzw. deren Estern enthaltende Doppelbindungen zum Teil oder vollständig hydriert. Es ist aber auch möglich die Hydrierung so durchzuführen, daß die Doppelbindungen während der Hydrierung vollständig erhalten bleiben. In diesem Fall fallen ungesättigte Dimerdiole gegebenenfalls in Mischung mit Trimertriolen und Restmonomeren an. Bevorzugt wird die Hydrierung jedoch so durchgeführt, daß die Doppelbindungen zumindest teilweise oder vollständig hydriert werden.

Eine weitere Möglichkeit zur Herstellung von vollständig gesättigten Dimerdiolen besteht darin, gesättigte Dimerfettsäuren durch Hydrierung in die entsprechenden gesättigten Dimerdiole zu überführen.

Die Herstellung von Dimerdiolen durch Dimerisierung von ungesättigten Alkoholen in Gegenwart von Kieselerde/Tonerde-Katalysatoren ist Gegenstand der WO 91/13918. Als ungesättigte Alkohole kommen hierbei ein- und/oder mehrfach ungesättigte Fettalkohole wie z. B. Palmitoleyl-, Oleyl-, Elaidyl, Linolyl-, Linolenyl- und Erucylalkohol zum Einsatz. Die Doppelbindungen der nach diesem Verfahren entstehenden ungesättigten Dimerdiole können gegebenenfalls anschließend teilweise oder vollständig hydriert werden.

Bevorzugte Ausgangsverbindungen C) für das erfindungsgemäße Verfahren sind Dimerdiole mit 36 Kohlenstoffatomen, wie sie beispielsweise nach einem der oben beschriebenen Verfahren aus Fettsäuren oder deren Estern bzw. Fettalkoholen mit 18 Kohlenstoffatomen hergestellt werden können.

Wie vorstehend bereits erwähnt, weisen die nach den genannten technischen Verfahren hergestellten Dimerdiole stets auch wechselnde Mengen an Trimertriolen und Restmonomeren auf, wobei der Anteil an echten Dimerdiolen in der Regel über 70 Gew.-% liegt. Der Begriff "Dimerdiol", der zur Kennzeichnung der Komponente C) verwendet wird, soll diesen Ausführungen entsprechend nicht nur die echten Dimerdiole sondern auch deren technischen Gemische mit den entsprechenden monomeren Alkoholen und den entsprechenden höheren Homologen, insbesondere den entsprechenden Triolen umfassen. Die die Komponente C) darstellenden "Dimerdiole" weisen vorzugsweise ein mittleres, aus Hydroxylgruppengehalt und Hydroxylfunktionalität berechenbares Molekulargewicht von 500 bis 670 und eine mittlere Hydroxylfunktionalität von 1,9 bis 2,2 auf.

Besonders bevorzugte Ausgangsverbindungen C) für das erfindungsgemäße Verfahren sind nach den genannten technischen Verfahren hergestellte Dimerdiole mit einem Dimerdiolanteil von 90 bis 99 Gew.-%. Ganz besonders bevorzugt sind darunter solche Dimerdiole, deren Doppelbindungen zumindest teilweise oder vollständig hydriert sind.

Die Ausgangsverbindungen C) werden bei der Durchführung des erfindungsgemäßen Verfahrens vorzugsweise in einer Menge von 20 bis 45, insbesondere von 25 bis 40 Gew.-%, bezogen auf das Gesamtgewicht der Komponenten A) bis E), eingesetzt.

Gegebenenfalls können beim erfindungsgemäßen Verfahren noch weitere Diole D) mitverwendet werden. Hierbei handelt es sich insbesondere um einfache zweiwertige Alkohole des Molekulargewichtsbereiches 62 bis 300, wie z. B. 1,2-Ethandiol, 1,2- und 1,3-Propandiol, die isomeren Butandiole, Pentandiole, Hexandiole, Heptandiole und Octandiole, 1,2- und 1,4-Cyclohexandiol, 1,4-Cyclohexandimethanol oder 4,4'-(1-Methylethyliden)-biscyclohexanol.

Diese Diole D) kommen, falls überhaupt, in Mengen von bis zu 70 Gew.-%, vorzugsweise bis zu 50 Gew.-%, bezogen auf das Gesamtgewicht der Komponenten C) und D) zum Einsatz.

Beim erfindungsgemäßen Verfahren können gegebenenfalls auch noch weitere gegenüber Isocyanatgruppen reaktive monofunktionelle Verbindungen E) mitverwendet werden. Hierbei handelt es sich insbesondere um einfache aliphatische bzw. cycloaliphatische Monoamine, wie Methylamin, Ethylamin, n-Propylamin, Isopropylamin, die isomeren Butylamine, Pentylamine, Hexylamine und Octylamine, n-Dodecylamin, n-Tetradecylamin, n-Hexadecylamin, n-Octadecylamin, Cyclohexylamin, die isomeren Methylcyclohexylamine sowie Aminomethylcyclohexan, sekundäre Monoamine, wie Dimethylamin, Diethylamin, Dipropylamin, Diisopropylamin, Dibutylamin, Diisobutylamin, Bis-(2-ethylhexyl)-amin, N-Methyl- und N-Ethylcyclohexylamin sowie Dicyclohexylamin oder Monoalkohole wie Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole sowie Hydroxmethylcyclohexan.

Diese monofunktionellen Verbindungen E) kommen, falls überhaupt, in Mengen von bis zu 40 Gew.-%, vorzugsweise 25 Gew.-%, bezogen auf die Gesamtmenge an gegenüber Isocyanaten reaktiven Ausgangsverbindungen C), D) und E) zum Einsatz.

Bevorzugte Ausgangsverbindungen E) für das erfindungsgemäße Verfahren sind die einfachen aliphatischen oder cycloaliphatischen Monoalkohole der genannten Art.

Zur Durchführung des erfindungsgemäßen Verfahrens werden die Uretdiongruppen aufweisenden Polyisocyanate A), gegebenenfalls unter Mitverwendung weiterer Diisocyanate B) mit den Dimerdiolen C), gegebenenfalls unter Mitverwendung weiterer Diole D) und gegebenenfalls weiteren gegenüber Isocyanaten reaktiven, monofunktionellen Verbindungen E) in dem genannten Äquivalent-Verhältnis von Isocyanatgruppen zu gegenüber Isocyanaten reaktiven Gruppen von 1,2:1 bis 0,6:1, vorzugsweise 1,1:1 bis 0,8:1 bei einer Reaktionstemperatur von 40 bis 110°C, besonders bevorzugt 60 bis 105°C umgesetzt.

In Abhängigkeit vom gewählten Äquivalentverhältnis wird die Reaktion bei Verwendung äquivalenter oder überschüssiger Mengen an Isocyanatgruppen bis zum Erreichen eines NCO-Restgehaltes von max. 2,0 Gew.-%, bevorzugt von unterhalb 1,2 Gew.-%, besonders bevorzugt von unter 0,9 Gew.-%, bei Verwendung unterschüssiger Mengen an Isocyanatgruppen bis zum Erreichen eines NCO-Restgehaltes von unterhalb 0,5 %, bevorzugt von unterhalb 0,2 %, besonders bevorzugt jedoch bis zur vollständigen Umsetzung aller Isocyanatgruppen geführt. Im übrigen werden Art und Mengenverhältnisse der genannten Ausgangskomponenten im Rahmen der gemachten Angaben so gewählt, daß die resultierenden Polyadditionsverbindungen den oben unter a) bis d) gemachten Angaben entsprechen, wobei (a) der Gehalt der Polyadditionsverbindungen an freien Isocyanatgruppen vorzugsweise unterhalb 1,2 Gew.-%, besonders bevorzugt unterhalb 0,9 Gew.-% (b) der Gehalt an Uretdiongruppen vorzugsweise bei 5 bis 15 Gew.-%, besonders bevorzugt bei 7 bis 14 Gew.-%, (c) der Gehalt an Urethangruppen vorzugsweise bei 11 bis 20 Gew.-%, besonders bevorzugt bei 12 bis 17 Gew.-% liegt, wobei (d) der Gehalt an Urethangruppen, die durch Umsetzung von Dimerdiolen mit Isocyanatgruppen erhalten wurden vorzugsweise mindestens 2 Gew.-%, besonders bevorzugt 2 bis 11 Gew.-% beträgt, und wobei die Polyadditionsverbindungen unterhalb 40 °C fest und oberhalb 125 °C flüssig sind, insbesondere einen nach der Differential-Thermoanalyse (DTA) bestimmten Schmelzpunkt bzw. Schmelzbereich aufweisen, der innerhalb eines Temperaturbereiches von 40 bis 110 °C, besonders bevorzugt innerhalb des Temperaturbereiches von 50 bis 100 °C liegt.

Die erfindungsgemäßen Uretdiongruppen aufweisenden Polyadditionsprodukte zeichnen sich bereits bei Temperaturen nur wenig oberhalb ihres Schmelzpunktes bzw. Schmelzbereiches durch sehr niedrige Schmelzviskositäten aus. Sie lassen sich daher nach dem erfindungsgemäßen Verfahren sehr einfach in der Schmelze bei Temperaturen unterhalb der Rückspalttemperatur von Uretdiongruppen herstellen.

Selbstverständlich kann die Umsetzung jedoch gegebenenfalls in einem geeigneten, gegenüber Isocyanatgruppen inerten Lösemittel durchgeführt werden. Geeignete Lösemittel für diese weniger bevorzugte Vorgehensweise sind beispielsweise die an sich bekannten üblichen Lacklösemittel wie z. B. Ethylacetat, Butylacetat, Ethylenglykolmonomethyl- oder -ethyletheracetat, 1-Methoxypropyl-2-acetat, 2-Butanon, 4-Methyl-2-pentanon, Cyclohexanon, Toluol, oder deren Gemische, aber auch Lösemittel wie Propylenglykoldiacetat, Diethylenglykoldimethylether, Diethylenglykolethyl- und -butyletheracetat, N-Methylpyrrolidon und N-Methylcaprolactam, oder Gemische solcher Lösemittel.

Diese gegebenenfalls mitverwendeten Lösemittel müssen nach erfolgter Umsetzung mit Hilfe geeigneter Methoden, beispielsweise durch einfaches Absaugen, Sprühtrocknung oder Schmelzextrusion in einer Ausdampfschnecke, vom erfindungsgemäßen Verfahrensprodukt abgetrennt werden.

Zur Beschleunigung der Reaktion können beim erfindungsgemäßen Verfahren die üblichen aus der Polyurethanchemie bekannten Katalysatoren eingesetzt werden, beispielsweise tert. Amine wie Triethylamin, Pyridin, Methylpyridin, Benzyldimethylamin, N,N-Endoethylenpiperazin, N-Methylpiperidin, Pentamethyldiethylentriamin, N,N-Dimethylaminocyclohexan, N,N'-Dimethylpiperazin oder Metallsalze wie Eisen(III)-chlorid, Zinkchlorid, Zink-2-ethylcaproat, Zinn(II)-ethylcaproat, Dibutylzinn(IV)-dilaurat und Molybdänglykolat.

Diese Katalysatoren kommen gegebenenfalls in Mengen von 0,001 bis 2,0 Gew.-%, bevorzugt 0,01 bis 0,2 Gew.-%, bezogen auf die Gesamtmenge der verwendeten Ausgangsverbindungen zum Einsatz.

Die erfindungsgemäßen Polyadditionsverbindungen stellen wertvolle Ausgangsmaterialien zur Herstellung von Polyurethankunststoffen nach dem Isocyanat-Polyadditionsverfahren dar. Sie finden insbesondere Verwendung als Vernetzerkomponente in hitzehärtbaren blockierungsmittelfreien PUR-Pulverlacken.

Geeignete Reaktionspartner für die erfindungsgemäßen Polyadditionsverbindungen sind dabei grundsätzlich sämtliche aus der Pulverlack-Technologie bekannten Bindemittel mit gegenüber Isocyanaten reaktionsfähigen Gruppen, wie z. B. Hydroxyl-, Carboxyl-, Amino-, Thiol-, Urethan- oder Harnstoffgruppen. Bevorzugt kommen jedoch hydroxyfunktionelle Pulverlackbindemittel zum Einsatz, die unterhalb 40°C fest und oberhalb 130°C flüssig sind. Die Erweichungstemperaturen dieser hydroxyfunktionellen Harze - bestimmt nach der Differential-Thermoanalyse (DTA) - liegen vorzugsweise innerhalb des Temperaturbereiches von 30 bis 120 °C, besonders bevorzugt innerhalb des Temperaturbereiches von 35 bis 110°C.

Ihre Hydroxylzahlen liegen im allgemeinen zwischen 25 und 200, vorzugsweise zwischen 30 und 130 und ihr mittleres (aus der Funktionalität und dem Hydroxylgehalt errechenbares) Molekulargewicht im allgemeinen zwischen 400 und 10 000, vorzugsweise zwischen 1 000 und 5 000.

Derartige Pulverlackbindemittel sind beispielsweise hydroxylgruppenhaltige Polyester, Polyacrylate oder Polyurethane, wie sie in den obengenannten Veröffentlichungen des Standes der Technik, z. B. der EP-A 00 45 998, oder der EP-A 02 54 152 beschrieben sind, aber auch beliebige Mischungen solcher Harze.

Zur Herstellung eines gebrauchsfertigen Pulverlacks werden die erfindungsgemäßen Polyadditionsverbindungen mit geeigneten hydroxyfunktionellen Pulverlackbindemitteln gemischt, gegebenenfalls mit weiteren Hilfs- und Zusatzmitteln, wie z. B. Katalysatoren, Pigmenten, Füllstoffen oder Verlaufsmitteln versetzt, und beispielsweise auf Extrudern oder Knetern oberhalb des Schmelzbereichs der Einzelkomponenten, beispielsweise 70 bis 130 °C, vorzugsweise 70 bis 110 °C, zu einem homogenen Material vereinigt.

Der nach Abkühlen der Schmelze resultierende Feststoff wird anschließend gemahlen und durch Sieben von den Kornanteilen oberhalb der gewünschten Korngröße, beispielsweise oberhalb 0,1 mm, befreit.

Die erfindungsgemäßen Polyadditionsverbindungen und die hydroxyfunktionellen Bindemittel kommen hierbei in solchen Mengenverhältnissen zum Einsatz, daß auf jede Hydroxylgruppe 0,6 bis 1,4, vorzugsweise 0,8 bis 1,2 an Isocyanatgruppen entfallen, wobei unter Isocyanatgruppen bei den erfindungsgemäßen Polyadditionsverbindungen die Summe aus in dimerer Form als Uretdiongruppen vorliegenden Isocyanatgruppen und freien Isocyanatgruppen verstanden wird.

Bei den gegebenenfalls zur Beschleunigung der Aushärtung mitzuverwendenden Katalysatoren handelt es sich um die üblichen, aus der Polyurethanchemie bekannten Verbindungen, wie sie schon oben beim erfindungsgemäßen Verfahren zur Reaktionsbeschleunigung beschrieben wurden. Diese Katalysatoren können gegebenenfalls in Mengen von 0,01 bis 5,0 Gew.-% vorzugsweise 0,05 bis 1,0 Gew.-%, bezogen auf die Gesamtmenge an organischem Bindemittel, d.h. erfindungsgemäßen Polyadditionsverbindungen in Kombination mit den hydroxyfunktionellen Pulverlackbindemitteln aber exklusive den gegebenenfalls verwendeten weiteren Hilfs- und Zusatzmitteln, zugesetzt werden.

Der so hergestellte sprühfertige Pulverlack kann nach üblichen Pulverauftragsverfahren, wie z. B. elektrostatischem Pulverversprühen oder Wirbelsintern, auf die zu überziehenden Substrate aufgebracht werden. Die Härtung der Überzüge erfolgt durch Erhitzen auf Temperaturen von 110 bis 220 °C, vorzugsweise 130 bis 200 °C beispielsweise während eines Zeitraums von ca. 10 bis 30 Minuten. Man erhält harte und elastische Beschichtungen, die sich durch gute Lösemittel- und Chemikalienbeständigkeit auszeichnen.

Aufgrund der niedrigen Schmelzviskosität der erfindungsgemäßen Uretdiongruppen aufweisenden Polyadditionsverbindungen weisen die mit ihrer Hilfe hergestellten Pulverlacke einen hervorragenden Verlauf und sehr hohen Glanz auf. Dabei werden zur Erzielung vollvernetzter Lackfilme deutlich niedrigere Einbrenntemperaturen benötigt, als bei Verwendung entsprechender Polyadditionsverbindungen des Standes der Technik, bei deren Herstellung keine Dimerdiole mitverwendet wurden.

Erfindungsgemäß können beliebige hitzeresistente Substrate, wie beispielsweise solche aus Glas oder Metallen, beschichtet werden.

Die nachfolgenden Beispiele dienen zur weiteren Erläuterung der Erfindung. Alle Prozentangaben, mit Ausnahme der Glanzwerte, beziehen sich auf Gewichtsprozente.

### Beispiele

### Beispiel 1

1 000 g (4,3 val) eines uretdiongruppenhaltigen Polyisocyanates auf Basis von 1-Isocyanato-3,3,5-trimethyl-5-isocyanatomethylcyclohexan (IPDI) mit einem Gehalt an freien Isocyanatgruppen von 17,9 %, einer mittleren NCO-Funktionalität von 2,0 und einem Gehalt an Uretdiongruppen (bestimmt durch Heißtitration) von 19,1 % werden unter trockenem Stickstoff auf 80 °C erwärmt.

Anschließend gibt man innerhalb von 30 min eine Mischung von 464 g (1,7 val) eines technischen Dimerdiols mit einem Dimerdiolanteil von über 90 Gew.-%, einer Viskosität bei 23 °C von 2 500 mPas, einer mittleren Hydroxylfunktionalität von 2 und einer OH-Zahl von 205 mg KOH/g, 76,5 g (1,7 val) 1,4-Butandiol und 117 g (0,9 val) 2-Ethyl-1-hexanol zu und rührt bei einer Reaktionstemperatur von max. 100 °C bis der NCO-Gehalt des Reaktionsgemisches nach 7 bis 8 h auf einen Wert von 0,9 % abgesunken ist.

Die Schmelze wird zum Erkalten auf ein Blech gegossen, und man erhält eine erfindungsgemäße Polyadditionsverbindung als praktisch farbloses Festharz mit folgenden Kenndaten:

| | |
|---|---|
| NCO-Gehalt | 0,9 % |
| Uretdiongruppen-Gehalt (ber.) | 11,5 % |
| NCO-Gehalt gesamt | 12,4 % |
| Schmelzpunkt | 71 - 73 °C |
| Urethangruppen-Gehalt (ber.) | 14,0 % |
| davon Urethangruppen aus Dimerdiol (ber.) | mind. 4,8 % |

### Beispiel 2 (Vergleich)

1 000 g (4,3 val) des uretdiongruppenhaltigen Polyisocyanates aus Beispiel 1 werden unter trockenem Stickstoff auf 80 °C erwärmt. Anschließend gibt man innerhalb von 30 min eine Mischung von 153 g (3,4 val) 1,4-Butandiol und 117 g (0,9 val) 2-Ethyl-1-hexanol zu. Wegen der rasch ansteigenden Viskosität des Reaktionsgemisches muß, um die Rührfähigkeit des Gemisches zu gewährleisten, die Heizbadtemperatur auf 110 °C erhöht werden. Nach ca. 40 min beträgt der NCO-Gehalt der Reaktionsmischung 2,8 %. Nach 60 min ist die Temperatur des Reaktionsgemisches aufgrund der weiter angestiegenen Viskosität unter der Einwirkung der beim Rühren auftretenden Scherkräfte trotz einer gleichbleibenden Außentemperatur von 110 °C auf 127 °C angestiegen. Der NCO-Gehalt hat sich auf 4,1 % erhöht und sinkt auch bei längerer Reaktionsdauer nicht wieder ab.

Das Vergleichsbeispiel 2 zeigt, daß bei der Umsetzung des uretdiongruppenhaltigen Polyisocyanates mit einfachen Diolen in der Schmelze entsprechend dem in Beispiel 1 beschriebenen Verfahren in starkem Maße Uretdionspaltung unter Freisetzung von Isocyanatgruppen eintritt.

### Beispiel 3 (Vergleich)

1 000 g (4,3 val) des uretdiongruppenhaltigen Polyisocyanates aus Beispiel 1 werden in 1 270 g wasserfreiem Toluol bei 80 °C unter trockenem Stickstoff vorgelegt. Man gibt innerhalb von 30 min eine Mischung von 153 g (3,4 val) 1,4-Butandiol und 117 g (0,9 val) 2-Ethyl-1-hexanol zu und rührt bei einer Reaktionstemperatur von 100 °C bis der NCO-Gehalt auf einen Wert von 0,2 % abgesunken ist. Die erhaltene gelbliche Lösung wird anschließend durch Sprühtrocknung in einem handelsüblichen Laborsprühtrockner Minispray Dryer 190 (Fa. Büchi) vollständig vom Lösungsmittel befreit. Man erhält ein blaßgelbes Produkt mit folgenden Kenndaten:

| | |
|---|---|
| NCO-Gehalt | 0,3 % |
| Uretdiongruppen-Gehalt (ber.) | 15,0 % |
| NCO-Gehalt gesamt | 15,3 % |
| Schmelzpunkt | 105 - 111 °C |

### Beispiel 4

1 000 g (4,3 val) des uretdiongruppenhaltigen Polyisocyanates aus Beispiel 1 werden unter trockenem Stickstoff auf 80 °C erwärmt. Anschließend gibt man innerhalb von 30 min eine Mischung von 697 g (3,4 val) des Dimerdiols aus Beispiel 1 und 117 g (0,9 val) 2-Ethyl-1-hexanol zu und rührt bei einer Reaktionstemperatur von max. 105 °C bis der NCO-Gehalt des Reaktionsgemisches nach ca. 3 h auf einen Wert von 0,7 % abgesunken ist.

Die Schmelze wird zum Erkalten auf ein Blech gegossen, und man erhält eine erfindungsgemäße Polyadditionsverbindung als praktisch farbloses Festharz mit folgenden Kenndaten:

| | |
|---|---|
| NCO-Gehalt | 0,7 % |
| Uretdiongruppen-Gehalt (ber.) | 10,5 % |
| NCO-Gehalt gesamt | 11,2 % |
| Schmelzpunkt | 65 - 67 °C |
| Urethangruppen-Gehalt (ber.) | 13,0 % |
| davon Urethangruppen aus Dimerdiol (ber.) | mind. 10,1 % |

### Beispiel 5

1000 g (5,1 val) eines Uretdion- und Isocyanuratgruppenhaltigen Polyisocyanates auf Basis von 1,6-Diisocyanatohexan (HDI) mit einem Gehalt an freien Isocyanatgruppen von 21,6 %, einer mittleren NCO-Funktionalität von 2,3 und einem Gehalt an Uretdiongruppen (bestimmt durch Heißtitration) von 15,0 % werden zusammen mit 66 g (0,5 val) 4,4'-Diisocyanatodicyclohexylmethan unter trockenem Stickstoff auf 80 °C erwärmt. Anschließend gibt man innerhalb von 30 min eine Mischung von 113 g (1,5 val) n-Butanol, 683 g (2,5 val) des Dimerdiols aus Beispiel 1 und 94 g (1,6 val) 1,6-Hexandiol zu und rührt bei einer Reaktionstemperatur von max. 108 °C bis der NCO-Gehalt des Reaktionsgemisches nach ca. 3 h auf einen Wert von 0,8 % abgesunken ist.

Die Schmelze wird zum Erkalten auf ein Blech gegossen, und man erhält eine erfindungsgemäße Polyadditionsverbindung als farbloses Festharz mit folgenden Kenndaten:

| | |
|---|---|
| NCO-Gehalt | 0,8 % |
| Uretdiongruppen-Gehalt (ber.) | 7,7 % |
| NCO-Gehalt gesamt | 8,5 % |
| Schmelzpunkt | 70 - 73 °C |
| Urethangruppen-Gehalt (ber.) | 15,8 % |
| davon Urethangruppen aus Dimerdiol (ber.) | mind. 6,4 % |

### Beispiel 6 (Verwendung)

75,6 Gew.-Teile eines hydroxylgruppenhaltigen Polyesters, der aus 66,6 Gew.-Teilen Terephthalsäure, 38,2 Gew.-Teilen Neopentylglykol, 5,3 Gew.-Teilen 1,6-Hexandiol und 4,5 Gew.-Teilen 1,1,1-Trimethylolpropan hergestellt wurde und eine OH-Zahl von 50 und einen Schmelzbereich (bestimmt nach der Differential-Thermoanalyse) von 55 bis 60 °C aufweist, werden mit 22,9 Gew.-Teilen der gemäß Beispiel 1 erhaltenen erfindungsgemäßen Polyadditionsverbindung, entsprechend einem Äquivalentverhältnis von Gesamt-NCO zu OH von 1:1, 1,0 Gew.-Teilen eines handelsüblichen Verlaufsmittels (®Perenol F 30 P, Fa. Henkel, Düsseldorf) und 0,5 Gew.-Teilen Zinn(II)-octoat als Katalysator gründlich gemischt und anschließend mit Hilfe eines Buss Cokneters vom Typ PLK 46 bei 150 U/min und einer Gehäusetemperatur von 40 °C im Einzugsbereich sowie an der Welle bzw. von 80 °C im Verfahrensteil homogenisiert, wobei Massetemperaturen von 95 bis 100 °C erreicht werden. Die erstarrte Schmelze wird mit Hilfe einer Sichtermühle ACM 2 (Fa. Hosokawa Mikropul) mit einem 90 um Sieb gemahlen und gesiebt. Das so erhaltene Pulver wird mit einer ESB Becherpistole bei einer Hochspannung von 70 kV auf ein entfettetes Stahlblech gespritzt und jeweils 30 min bei 160 °C und 170 °C zu einer glattverlaufenden transparenten Beschichtung ausgehärtet.

Zum Vergleich wird analog aus 79,1 Gew.-Teilen des gleichen hydroxylgruppenhaltigen Polyesters mit 19,4 Gew.-Teilen der gemäß Vergleichsbeispiel 3 erhaltenen Polyadditionsverbindung, 1,0 Gew.-Teilen eines handelsüblichen Verlaufsmittels (®Perenol F 30 P; Fa. Henkel, Düsseldorf) und 0,5 Gew.-Teilen Zinn(II)-octoat als Katalysator ein Pulverklarlack hergestellt, auf ein entfettetes Stahlblech gespritzt und ebenfalls jeweils 30 min bei 160 und 170 °C ausgehärtet. Das Äquivalentverhältnis von Gesamt-NCO zu OH liegt ebenfalls bei 1:1.

Bei Schichtdicken von ca. 60 µm werden folgende lacktechnische Eigenschaften gefunden:

Pulverlack mit Polyadditionsverbindung aus

| | | Beispiel 1 | | Vergleichsbeispiel 3 | |
|---|---|---|---|---|---|
| | | 30' 160°C | 30' 170°C | 30' 160°C | 30' 170°C |
| ET^{a)} | | >9 | >9 | 0, 6 | >9 |
| | | | | | |
| Glanz^{b)} | 20° | 86 | 89 | 60 | 64 |
| | 60° | 103 | 105 | 100 | 100 |
| | | | | | |
| Ac^{c)} | DH | 50 | 50 | 50 | 50 |
| | Urteil | 2 | 2 | 2 m | 2 m |

| | | | | | |
|---|---|---|---|---|---|
| a) ET = Erichsentiefung nach DIN 53156 | | | | | |
| b) Glanz = Glanz nach Gardner; 20 ° bzw. 60 ° Reflexionswinkel | | | | | |
| c) Ac = Acetontest; DH = Anzahl der Doppelhübe mit getränktem Wattebausch Urteil = 0 = Film intakt 1 = Filmoberfläche angeweicht 2 = Film bis zum Untergrund angequollen m = matt (Glanzverlust) | | | | | |

Der Vergleich zeigt, daß mit Hilfe der erfindungsgemäßen Polyadditionsverbindung bereits bei niedrigerer Einbrenntemperatur ein vollvernetzter, elastischer Lackfilm erhalten wird, der sich außerdem durch einen besseren Verlauf und höheren Glanz auszeichnet.

### Beispiel 7 (Verwendung)

47,2 Gew.-Teile des in Beispiel 6 beschriebenen hydroxylgruppenhaltigen Polyesters werden mit 15,8 Gew.-Teilen der erfindungsgemäßen Polyadditionsverbindung aus Beispiel 4, 1,0 Gew.-Teilen eines handelsüblichen Verlaufsmittels (Modaflow P III), 1,0 Gew.-Teilen Zinn(II)-octoat als Katalysator und 35,0 Gew.-Teilen eines Weißpigmentes (Bayertitan R-KB 4) nach dem in Beispiel 6 beschriebenen Verfahren zu einem Weißlack verarbeitet. Das Pulver wird mit einer ESB-Becherpistole bei einer Hochspannung von 70 KV auf ein entfettetes Stahlblech gespritzt und 20 min bei 180 °C ausgehärtet.

Bei einer Schichtdicke von etwa 70 µm werden folgende lacktechnischen Eigenschaften gefunden:

| | | |
|---|---|---|
| ET^{a)} | | > 9 |
| Glanz^{b)} | 20 ° | 65 |
| | 60 ° | 86 |
| | | |
| Acc) | DH | 50 |
| | Urteil | 2 |

| | | |
|---|---|---|
| a) ET = Erichsentiefung nach DIN 53156 | | |
| b) Glanz = Glanz nach Gardner; 20 ° bzw. 60 ° Reflexionswinkel | | |
| c) Ac = Acetontest; DH = Anzahl der Doppelhübe mit getränktem Wattebausch Urteil = 0 = Film intakt 1 = Filmoberfläche angeweicht 2 = Film bis zum Untergrund angequollen m = matt (Glanzverlust) | | |

## Patentansprüche

1. Polyadditionsverbindungen, die unterhalb von 40 °C in fester und oberhalb von 125 °C in flüssiger Form vorliegen und
a) einen Gehalt an freien Isocyanatgruppen (berechnet als NCO; Molekulargewicht = 42) von 0 bis 2 Gew.-%,
b) einen Gehalt an Uretdiongruppen (berechnet als C₂N₂O₂; Molekulargewicht = 84) von 3 bis 16 Gew.-% und
c) einen Gehalt an Urethangruppen (berechnet als -NH-CO-O-, Molekulargewicht = 59) von 10 bis 22 Gew.-% aufweisen,
dadurch gekennzeichnet, daß
d) der Gehalt an Urethangruppen, die durch Reaktion von Dimerdiolen mit Isocyanatgruppen erhalten wurden, mindestens 1 Gew.-% beträgt.

2. Verfahren zur Herstellung von Polyadditionsverbindungen gemäß Anspruch 1, dadurch gekennzeichnet, daß man
A) Uretdiongruppen aufweisende Polyisocyanate einer mittleren Isocyanatfunktionalität von mindestens 2,0, gegebenenfalls unter Mitverwendung von
B) weiteren Diisocyanaten in einer Menge von bis zu 70 Gew.-%, bezogen auf das Gesamtge-wicht der Komponenten A) und B), mit
C) Dimerdiolen, gegebenenfalls unter gleichzeitiger Mitverwendung von
D) weiteren Diolen eines Molekulargewichtes von 62 - 300 in einer Menge von bis zu 70 Gew.-%, bezogen auf das Gesamtgewicht der Komponenten C) und D), und/oder gegebenenfalls
E) weiteren gegenüber Isocyanatgruppen reaktiven, monofunktionellen Verbindungen in einer Menge von bis zu 40 Gew.-%, bezogen auf das Gesamtgewicht der Komponenten C), D) und E),unter Einhaltung eines Äquivalentverhältnisses von Isocyanatgruppen zu gegenüber Isocyanaten reaktiven Gruppen von 1,2:1 bis 0,6:1 miteinander umsetzt, wobei im übrigen Art und Mengenverhältnisse der genannten Ausgangsstoffe so gewählt werden, daß die resultierenden Verfahrensprodukte den in Anspruch 1 unter a) bis d) genannten Bedingungen entsprechen.

3. Verfahren gemäß Anspruch 2, dadurch gekennzeichnet, daß man als Uretdiongruppen aufwei-sende Polyisocyanate A) solche auf Basis von Diisocyanaten mit aliphatisch und/oder cycloaliphatisch gebundenen Isocyanatgruppen oder Gemische solcher Polyisocyanate verwendet.

4. Verfahren gemäß Anspruch 2 und 3, dadurch gekennzeichnet, daß man als Uretdiongruppen aufweisende Polyisocyanate A) solche auf Basis von 1,6-Diisocyanatohexan und/oder 1-Isocyanato-3,3,5-trimethyl-5-isocyanatomethylcyclohexan oder Gemische solcher Polyisocyanate verwendet.

5. Verfahren gemäß Anspruch 2 bis 4, dadurch gekennzeichnet, daß die Dimerdiole C) ein mittleres Molekulargewicht von 500 bis 670 und eine mittlere Hydroxylfunktionalität von 1,9 bis 2,2 aufweisen und durch Dimerisierung einwertiger, olefinisch ungesättigter aliphatischer Alkohole oder durch Hydrierung von Dimerisierungsprodukten olefinisch ungesättigter, aliphatischer Monocarbonsäuren erhalten worden sind.

6. Verwendung der Polyadditionsverbindungen gemäß Anspruch 1 als Ausgangskomponente bei der Herstellung von Polyurethankunststoffen.

7. Verwendung gemäß Anspruch 6 als Vernetzerkomponente in Hitze-vernetzbaren Zweikomponenten-Polyurethan-Pulverlacken bei der Beschichtung beliebiger hitzeresistenter Substrate nach den Methoden der Pulverlack-technologie.

## Claims

1. Polyaddition compounds which are in solid form below 40°C and in liquid form above 125°C and
a) have a content of 0 to 2 wt.% of free isocyanate groups (calculated as NCO; molecular weight = 42),
b) a content of 3 to 16 wt.% of uretdione groups (calculated as C₂N₂O₂; molecular weight = 84) and
c) a content of 10 to 22 wt.% of urethane groups (calculated as -NH-CO-O-, molecular weight = 59),
characterised in that
d) the content of urethane groups obtained by reaction of dimeric diols with isocyanate groups, is at least 1 wt.%.

2. A method of producing polyaddition compounds according to claim 1, characterised in that
A) polyisocyanates containing uretdione groups and having an average isocyanate functionality of at least 2.0, optionally also using
B) other diisocyanates in a proportion of up to 70 wt.% relative to the total weight of components A) and B) are reacted with
C) dimeric diols, optionally with simultaneous use of
D) other diols having a molecular weight of 62 - 300 in a proportion of up to 70 wt.% relative to the total weight of components C) and D) and/or optionally
E) other monofunctional compounds reacting with isocyanate groups and in a proportion of up to 40 wt.% relative to the total weight of components C) , D) and E), maintaining an equivalent ratio of 1.2 : 1 to 0.6 : 1 isocyanate groups to groups reacting with isocyanate groups, the nature and proportions of the aforementioned starting substances being chosen so that the substances resulting from the process conform to the conditions stated in claim 1 a) to d).

3. A method according to claim 2, characterised in that the polyisocyanates A) containing uretdione groups are based on diisocyanates with aliphatically and/or cycloaliphatically bonded isocyanate groups, or are mixtures of such polyisocyanates.

4. A method according to claims 2 and 3, characterised in that polyisocyanates A) comprising uretdione groups are based on 1,6-diisocyanatohexane and/or 1-isocyanato-3,3,5-trimethyl-5-isocyanatomethyl cyclohexane or are mixtures of such polyisocyanates.

5. A method according to claims 2 to 4, characterised in that the dimeric diols C) have an average molecular weight of 500 to 670 and an average hydroxyl functionality of 1.9 to 2.2 and are obtained by dimerisation of monohydric, olefinically unsaturated aliphatic alcohols or by hydrogenation of dimerisation products of olefinically unsaturated aliphatic monocarboxylic acids.

6. Use of the polyaddition compounds according to claim 1 as starting components in the manufacture of polyurethane plastics.

7. Use according to claim 6 as cross-linking components in thermally cross-linkable two-component polyurethane powder lacquers for coating any heat-resistant substrates by the methods of powder-lacquer technology.

## Revendications

1. Composés de polyaddition, qui se présentent en dessous de 40°c sous forme solide et au-dessus de 125°C sous forme liquide, et qui présentent
a) une teneur en radicaux isocyanate libres (calculés comme NCO ; poids moléculaire = 42) allant de 0 à 2% en poids ;
b) une teneur en radicaux uréthdione (calculés comme C₂N₂O₂ ; poids moléculaire = 84) allant de 3 à 16% en poids, et
c) une teneur en radicaux uréthanne (calculés comme -NH-CO-O ; poids moléculaire = 59) allant de 10 à 22% en poids,
caractérisés en ce que
d) la teneur en radicaux uréthanne, qui sont obtenus par réaction de diols dimères avec les radicaux isocyanate, s'élève à au moins 1% en poids.

2. Procédé de préparation des composés de polyaddition suivant la revendication 1, caractérisé en ce que l'on fait réagir les uns avec les autres
A) un polyisocyanate présentant des radicaux uréthdione, d'une fonctionnalité isocyanate moyenne d'au moins 2,0, facultativement avec utilisation simultanée
B) d'autres diisocyanates en une quantité de jusqu'à 70% en poids, sur base du poids total des composants A) et B), avec
C) des diols dimères, facultativement avec utilisation simultanée
D) d'autres diols d'un poids moléculaire allant de 62 à 300, en une quantité de jusqu'à 70% en poids, sur base du poids total des composants C) et D), et/ou facultativement
E) d'autres composés monofonctionnels, réagissant avec les radicaux isocyanate, en une quantité de jusqu'à 40% en poids, sur base du poids total des composants C), D) et E), en respectant un rapport d'équivalent des radicaux isocyanate aux radicaux réagissant avec les isocyanates de 1,2:1 à 0,6:1, où du reste, le type et les rapports quantitatifs des matières de départ citées sont choisis de sorte que les produits résultants du procédé correspondent aux conditions citées sous a) à d) à la revendication 1.

3. Procédé suivant la revendication 2, caractérisé en ce que l'on utilise comme polyisocyanate présentant des radicaux uréthdione A), ceux à base de diisocyanates avec radicaux isocyanate liés de manière aliphatique et/ou cycloaliphatique ou des mélanges de tels polyisocyanates.

4. Procédé suivant les revendications 2 et 3, caractérisé en ce que l'on utilise comme polyisocyanate présentant des radicaux uréthdione A), ceux à base de 1,6-diisocyanatohexane et/ou de 1-isocyanato-3,3,5-triméthyl-5-isocyanatométhylcyclohexane ou des mélanges de tels polyisocyanates.

5. Procédé suivant les revendications 2 à 4, caractérisé en ce que les diols dimères C) présentent un poids moléculaire moyen allant de 500 à 670 et une fonctionnalité hydroxyle allant de 1,9 à 2,2 et en ce qu'ils sont obtenus par dimérisation d'alcools aliphatiques monovalents, oléfiniquement insaturés ou par hydrogénation des produits de dimérisation d'acides monocarboxyliques aliphatiques, oléfiniquement insaturés.

6. Utilisation des composés de polyaddition suivant la revendication 1, comme composant de départ pour la préparation de matières plastiques en polyuréthanne.

7. Utilisation suivant la revendication 6, comme composant de réticulation dans les revêtements en poudre en polyuréthanne, à deux composants, réticulables à chaud, lors de l'enduction de substrats résistant à la chaleur, quelconques par les procédés de la technologie de revêtement par poudre.
